(19) Europäisches Patentamt
European Patent Office
Office européen des brevets

(11) EP 4 108 434 B1

(12) # EUROPEAN PATENT SPECIFICATION

(45) Date of publication and mention of the grant of the patent:
**17.04.2024 Bulletin 2024/16**

(21) Application number: **21181463.7**

(22) Date of filing: **24.06.2021**

(51) International Patent Classification (IPC):
***B29D 7/01*** *(2006.01)* ***B32B 25/00*** *(2006.01)*
***C08F 210/16*** *(2006.01)* ***C08J 5/18*** *(2006.01)*
***B32B 7/04*** *(2019.01)* ***C08L 23/08*** *(2006.01)*
*C08F 4/659* *(2006.01)*

(52) Cooperative Patent Classification (CPC):
(C-Sets available)
**C08F 210/16; C08J 5/18; C08L 23/0815;**
B29D 7/01; C08F 4/65912; C08F 4/65916;
C08F 2420/07; C08J 2323/08; C08J 2423/08;
C08L 2308/00; C08L 2314/06 (Cont.)

(54) **POLYETHYLENE COPOLYMER FOR A FILM LAYER**

POLYETHYLENCOPOLYMER FÜR EINE FOLIENSCHICHT

COMPOSITION DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**
- **ALABRUNE, Arnaud**
  **92400 Courbevoie (FR)**
- **SUMERIN, Victor**
  **06101 Porvoo (FI)**
- **KANELLOPOULOS, Vasileios**
  **4021 Linz (AT)**

(74) Representative: **TBK**
**Bavariaring 4-6**
**80336 München (DE)**

(56) References cited:
**WO-A1-2016/083208**
**WO-A1-2021/013552**
**WO-A1-2021/191018**
**US-A1- 2014 194 277**

EP 4 108 434 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815;**
C08F 210/16, C08F 210/08, C08F 2500/12, C08F 2500/27;
C08F 210/16, C08F 210/14, C08F 210/08, C08F 2500/12, C08F 2500/27, C08F 2500/26, C08F 2500/31, C08F 2500/05, C08F 2500/30;
C08F 210/16, C08F 210/14, C08F 2500/12, C08F 2500/27, C08F 2500/08

## Description

The present invention relates to a metallocene-catalysed multimodal polyethylene copolymer (P), to the use of the multimodal polyethylene copolymer (P) in film applications and to a film comprising the polymer composition of the invention.

Unimodal polyethylene (PE) polymers, for instance SSC products, are usually used for film applications. Unimodal PE polymers have for instance good optical properties, like low haze, but for instance, the melt processing of such polymers is not satisfactory in production point of view and may cause quality problems of the final product as well. Multimodal PE polymers with two or more different polymer components are better to process, but e.g. melt homogenisation of the multimodal PE may be problematic resulting in inhomogeneous final products evidenced e.g. by high gel content of the final product.

WO 2021009189, WO 2021009190 and WO 2021009191 of Borealis disclose a process for preparing multimodal PE polymers in two loop reactors and one gas phase reactor.

The polymers produced in the Examples have a total density of 938 or 939 kg/m$^3$. The $MFR_2$ (190°C, 2.16 kg, ISO 1133) of the polymer components produced in the first loop is 22 g/10 min. Film properties, like sealing initiation temperature (SIT) are not mentioned at all.

Also WO 2021009192 discloses such a process. The polymer produced in the Examples has an even higher density of 951 kg/m$^3$. The $MFR_2$ (190°C, 2.16 kg, ISO 1133) of the polymer component produced in the first loop is 32 g/10 min. Film properties, like sealing initiation temperature (SIT) are not mentioned at all.

WO 2021/013552 A1 relates to a polyethylene composition comprising a base resin, wherein the base resin comprises (A) a first ethylene-1-butene copolymer fraction (A) having a 1-butene content of from 0.5 wt% to 7.5 wt%, based on the total weight amount of monomer units in the first ethylene-1-butene copolymer fraction (A), and a melt flow rate $MFR_2$ in the range of from 1.0 to less than 50.0 g/10 min, determined according to ISO 1133 at a temperature of 190°C and a load of 2.16 kg; and (B) a second ethylene-1-butene copolymer fraction having a higher 1-butene content as the first ethylene-1-butene copolymer fraction (B); wherein the base resin is polymerized in the presence of a single site catalyst system and has a density of from 913.0 to 920.0 kg/m$^3$ and a 1-butene content of from 8.0 to 13.0 wt%, based on the total weight amount of monomer units in the base resin, a process for preparing said polyethylene composition, an article comprising said polyethylene composition and the use of said polyethylene composition for the production of an article. WO 2021/191018 A1 (Art. 54(3) EPC) relates to a polymer composition, to the use of the polymer composition in film applications and to a film comprising the polymer composition. WO 2016/083208 A1 relates to a polymer composition, to the use of the polymer composition in film applications and to a film comprising the polymer composition. US 2014/194277 A1 relates to a polyethylene-based resin composition which comprises from 41 to 99 wt % of (A) an ethylene-based polymer satisfying specific conditions and from 1 to 59 wt % of (B) an ethylene-based polymer satisfying specific conditions, wherein MFR of the composition as a whole is from 0.05 to 50 g/10 min and the density is from 0.910 to 0.960 g/cm$^3$.

There is a continuous need to find multimodal PE polymers with different property balances for providing tailored solutions to meet the increasing demands of the end application producers e.g. for reducing the production costs while maintaining or even improving the end-product properties. Tailored polymer solutions are also needed to meet the requirements of continuously developing equipment technology in the end application field. Therefore, there is a need in the art for providing a material that provides low sealing initiation temperature, good optical properties and mechanical properties, especially dart drop (impact strength). In other words, a material is desirable that provides an advantageous combination of preferable sealing properties, good optics and mechanical properties, especially SIT, haze and dart drop, to films prepared from such a material.

## Description of the invention

The present invention is therefore directed to a metallocene-catalysed multimodal polyethylene copolymer (P), which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of from 920 to 950 kg/m$^3$,
an $MFR_2$ (190°C, 2.16 kg, ISO 1133) in the range of from 2.0 to 40.0 g/10 min,
a 1-butene content in the range of 0.5 to 5.0 wt%, based on the ethylene-1-butene polymer component (A) and an isolated 1-butene comonomer unit amount of > 95 %,

whereby the isolated 1-butene comonomer unit amount is calculated according to formula (I)

$$\text{EXE\%} = 100 \times \frac{EXE}{EXE + EXX + XXX}$$

X being the number of 1-butene branches per 1000 carbon (kCb); and

the ethylene polymer component (B) has

a density in the range of from 880 to 915 kg/$m^3$,
an $MFR_2$ (190°C, 2.16 kg, ISO 1133) in the range of from 0.01 to 1.5 g/10 min
a 1-hexene content in the range of 15.0 to 25.0 wt% based on the ethylene-1-hexene polymer compound (B), an isolated 1-hexene comonomer unit amount according to formula (I), wherein X being the number of 1-hexene branches per 1000 carbon (kCb); fulfilling the equation
EXE% > -1.1875* C6 (of (B) in wt%) + 110.41; and

whereby the multimodal polyethylene copolymer (P) has

a density in the range of from 905 to 915 kg/$m^3$,
an $MFR_2$ (190°C, 2.16 kg, ISO 1133) in the range of from 0.5 to below 2.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50

The ethylene-1-butene polymer component (A) of the metallocene-catalysed multimodal polyethylene copolymer (P) consists of an ethylene polymer fraction (A-1) and an ethylene polymer fraction (A-2), wherein the ethylene polymer fraction (A-1) has a density in the range of from 920 to 960 kg/$m^3$ and an $MFR_2$ (190°C, 2.16 kg, ISO 1133) in the range of from 1.0 to 20.0 g/10 min and
the ethylene polymer fraction (A-2) has a density in the range of from 930 to 950 kg/$m^3$, and an $MFR_2$ and (190°C, 2.16 kg, ISO 1133) the range of 3.0 to 40.0 g/10 min.

Unexpectedly the multimodal polyethylene copolymer (P) of the invention provides improved sealing properties to films, such as especially low sealing initiation temperature (SIT) in combination with improved mechanical properties to films such as high dart drop strength (DDI).

The invention is therefore further directed to a film comprising at least one layer comprising the metallocene-catalysed multimodal polyethylene copolymer (P).

The film is characterized by a sealing initiation temperature (SIT) measured as described in the experimental part on a 40 μm monolayer test blown film of below 82°C, preferably in the range of 60°C to 80°C, more preferably in the range of 65°C to 78°C, like 68°C to 78°C.

In an embodiment of the invention the films furthermore have in addition to the low SIT, a dart drop impact (DDI) determined according to ASTM D1709, method A on a 40 μm monolayer test blown film of at least 1000 g to more than 1700 g, preferably at least 1200 g to more than 1700 g, more preferably at least 1500 g to more than 1700 g.

*Definitions*

Where the term "comprising" is used in the present description and claims, it does not exclude other non-specified elements of major or minor functional importance. For the purposes of the present invention, the term "consisting of' is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed multimodal polyethylene copolymer is defined in this invention as multimodal polyethylene copolymer (P), which has been produced in the presence of a metallocene catalyst.

Term "multimodal" in context of multimodal polyethylene copolymer (P) means herein multimodality with respect to melt flow rate (MFR) of the ethylene polymer components (A) and (B) as well as ethylene polymer fraction (A-1) and (A-2), i.e. the ethylene polymer components (A) and (B), as well as fractions (A-1) and (A-2) have different MFR values.

The multimodal polyethylene copolymer (P) can have further multimodality with respect to one or more further

properties between the ethylene polymer components (A) and (B) as well as between fractions (A-1) and (A-2), as will be described later below.

The multimodal polyethylene copolymer (P) of the invention as defined above, below or in claims is also referred herein shortly as "multimodal PE" or "multimodal copolymer (P)".

The following preferable embodiments, properties and subgroups of multimodal PE and the ethylene polymer components (A) and (B) thereof, as well as the ethylene polymer fractions (A-1) and (A-2) and the film of the invention including the preferable ranges thereof, are independently generalisable so that they can be used in any order or combination to further define the preferable embodiments of the multimodal PE and the article of the invention.

**Multimodal PE as well as ethylene polymer component (A) and (B) and ethylene polymer fractions (A-1) and (A-2)**

The metallocene produced multimodal polyethylene copolymer (P) is referred herein as "multimodal", since the ethylene-1-butene polymer component (A), including ethylene polymer fractions (A-1) and (A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The metallocene produced multimodal polyethylene copolymer (P) consists of

(i) 30.0 to 70.0 wt% of an ethylene-1-butene polymer component (A), and
(ii) 70.0 to 30.0 wt% of an ethylene-1-hexene polymer component (B).

The amount of (A) and (B) add up to 100.0 wt%.

In the present invention, the ethylene-1-butene polymer component (A) consists of an ethylene polymer fraction (A-1) and (A-2).

In the ethylene-1-butene polymer component (A) consisting of ethylene polymer fractions (A-1) and (A-2), the $MFR_2$ of the ethylene polymer fractions (A-1) and (A-2) may be different from each other.

The ethylene polymer fraction (A-1) has a $MFR_2$ (190°C, 2.16 kg, ISO 1133) in the range of 1.0 to 20.0 g/10 min, preferably of 1.5 to 18.0 g/10 min, more preferably of 2.0 to 16.0 g/10 min and even more preferably of 2.5 to 14.0 g/10 min, like 3.0 to 12.0 g/10 min.

The ethylene polymer fraction (A-2) has a $MFR_2$ (190°C, 2.16 kg, ISO 1133) in the range of 3.0 to 40.0 g/10 min, preferably of 3.2 to 30.0 g/10 min, more preferably of 3.5 to 20.0 g/10 min and most preferably of 3.5 to 10.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 2.0 to 40 g/10 min, preferably of 2.5 to 30 g/10 min, more preferably of 3.0 to 20 g/10 min and even more preferably of 3.2 to 10 g/10 min.

The ethylene polymer component (B) has a $MFR_2$ (190°C, 2.16 kg, ISO 1133) in the range of 0.01 to 1.5 g/10 min, preferably of 0.05 to 1.5 g/10 min, more preferably of 0.1 to 1.2 g/10 min and even more preferably of 0.2 to 1.0 g/10 min.

The $MFR_2$ (190°C, 2.16 kg, ISO 1133) of the multimodal copolymer (P) is in the range of 0.5 to 2.0 g/10 min, preferably 0.8 to 1.8 g/10 min, more preferably 1.0 to 1.5 g/10 min.

The multimodal copolymer (P) has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 28 to 35.

In an embodiment of the invention it is preferred the ratio of the $MFR_2$ (190°C, 2.16 kg, ISO 1133) of ethylene-1-butene polymer component (A) to the $MFR_2$ (190°C, 2.16 kg, ISO 1133) of the final multimodal copolymer (P) is at least 2.5 to 20.0, preferably 3.0 to 15.0 and more preferably of 3.5 to 10.0.

Naturally, in addition to multimodality with respect to, i.e. difference between, the $MFR_2$ of ethylene polymer components (A) and (B), the multimodal PE of the invention can also be multimodal e.g. with respect to one or both of the two further properties:
multimodality with respect to, i.e. difference between,

- the comonomer content(s) present in the ethylene polymer components (A) and (B); and/or
- the density of the ethylene polymer components (A) and (B).

Preferably, the multimodal copolymer (P) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process,

then the comonomer content of the first produced component, e.g. component (A), can be measured and the comonomer content of the other component, e.g. component (B), can be calculated according to following formula:

Comonomer content (mol%) in component B = (comonomer content (mol%) in final product – (weight fraction of component A * comonomer content (mol%) in component A)) / (weight fraction of component B)

The total amount of 1-butene, based on the multimodal polymer (P) is preferably in the range of from 0.1 to 1.0 wt%, preferably 0.2 to 0.8 wt% and more preferably 0.3 to 0.6 wt%. The total amount of 1-hexene, based on the multimodal polymer (P) preferably is in the range of 2.0 to 20.0 wt%, preferably 4.0 to 18.0 wt% and more preferably 6.0 to 15.0 wt%.

The total amount (wt%) of 1-butene, present in the ethylene-1-butene polymer component (A) is of 0.5 to 5.0 wt%, preferably of 0.8 to 4.0 wt%, more preferably of 1.0 to 3.0 wt%, even more preferably of 1.0 to 2.0 wt%, based on the ethylene-1-butene polymer component (A).

The total amount (wt%) of 1-hexene, present in the ethylene-1-hexene polymer component (B) is of 15.0 to 25.0 wt%, preferably of 16.0 to 22.0 wt%, more preferably of 17.0 to 20.0 wt%, based on the ethylene-1-hexene polymer component (B).

Even more preferably the multimodal polymer (P) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 kg/$m^3$, preferably of 925 to 950 kg/$m^3$, more preferably 930 to 945 kg/$m^3$ and/or the density of the ethylene polymer component (B) is of in the range of 880 to 915 kg/$m^3$, preferably of 885 to 905 kg/$m^3$ and more preferably of 888 to 900 kg/$m^3$.

The polymer fraction (A-1) has a density in the range of from 920 to 960 kg/$m^3$, preferably of 925 to 955 kg/$m^3$, more preferably of 930 to 950 kg/$m^3$, like 935 to 945 kg/$m^3$.

The density of the polymer fraction (A-2) is in the range of from 930 to 950 kg/$m^3$, preferably of 935 to 945 kg/$m^3$.

The metallocene catalysed multimodal copolymer (P) is preferably a linear low density polyethylene (LLDPE) which has a well known meaning.

The density of the multimodal copolymer (P) is in the range of 905 to 915 kg/$m^3$, preferably of 908.0 to 915 kg/$m^3$ and more preferably of 910.0 to 915.0 kg/$m^3$.

More preferably the multimodal copolymer (P) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

Furthermore, the ethylene-1-butene polymer component (A) is characterized by an isolated 1-butene comonomer unit amount of > 95.0%, preferably at least 98.0% and more preferably 100%. The isolated comonomer unit amount is calculated according to formula (I)

$$\mathrm{EXE\%} = 100 \times \frac{EXE}{EXE + EXX + XXX}$$

wherein X being the number of 1-butene branches per 1000 carbon (kCb).

In addition, the ethylene-1-hexene polymer component (B) has an isolated 1-hexene comonomer unit amount according to formula (I), wherein X being the number of 1-hexene branches per 1000 carbon (kCb); fulfilling the equation

$$\mathrm{EXE\%} > -1.1875 * \mathrm{C6\ (of\ (B)\ in\ wt\%)} + 110.41$$

Preferably, the ethylene-1-hexene polymer component (B) fulfils the equation

$$\mathrm{EXE\%} > -1.1875 * \mathrm{C6\ (of\ (B)\ in\ wt\%)} + 111.41,$$

more preferably

$$EXE\% > -1.1875 * C6\ (\text{of (B) in wt\%}) + 112.41$$

and even more preferably

$$EXE\% > -1.1875 * C6\ (\text{of (B) in wt\%}) + 113.41.$$

The isolated 1-hexene comonomer unit amount for component (B) is preferably > 92.0%, preferably at least 93.0% and more preferably at least 94.0%.

A suitable upper limit is < 100%, preferably 99.0 %, more preferably 98.0%.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal copolymer (P), preferably in an amount of 32.0 to 55.0 wt% and even more preferably in an amount of 34.0 to 45.0 wt%.

Thus, the ethylene polymer component (B) is present in an amount of 70.0 to 30.0 wt% based on the multimodal copolymer (P), preferably in an amount of 68.0 to 45.0 wt% and more preferably in an amount of 66.0 to 55.0 wt%.

The metallocene catalysed multimodal copolymer (P), can be produced in a 2-stage process, preferably comprising a slurry reactor (loop reactor ), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (P).

In case that the ethylene component (A) of the multimodal copolymer (P) consists of ethylene polymer fractions (A-1) and (A-2), the multimodal copolymer (P) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE process or the Borstar PE 3G process.

The metallocene catalysed multimodal copolymer (P) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal copolymer (P). This can counted as part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene

or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (II):

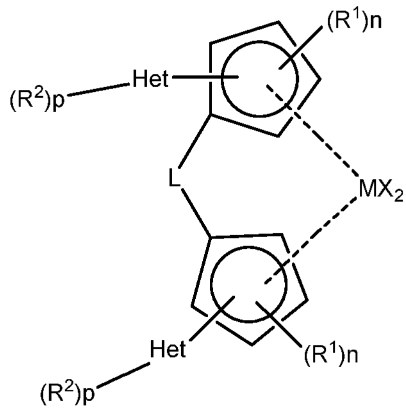

(II)

wherein each X is independently a halogen atom, a $C_{1-6}$-alkyl, $C_{1-6}$-alkoxy group, phenyl or benzyl group;

each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and each p is 0 to 1.

Preferably, the compound of formula (II) has the structure

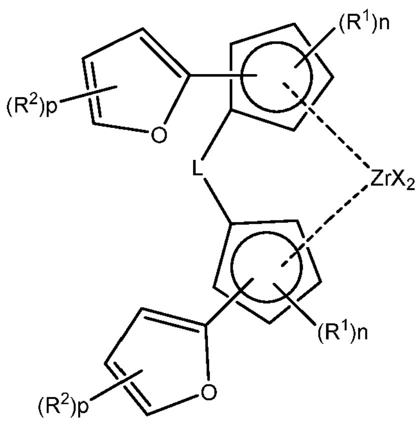

(II′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (II) are

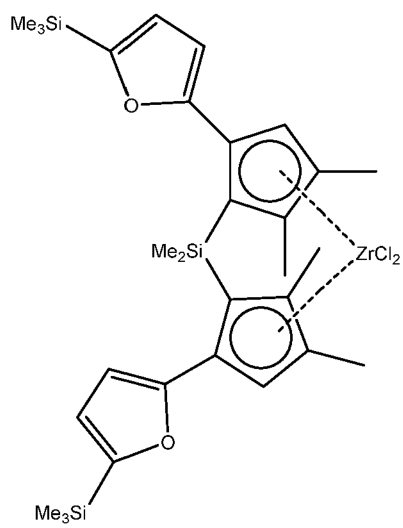

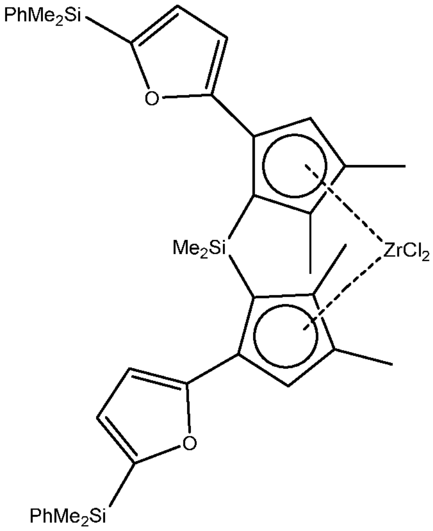

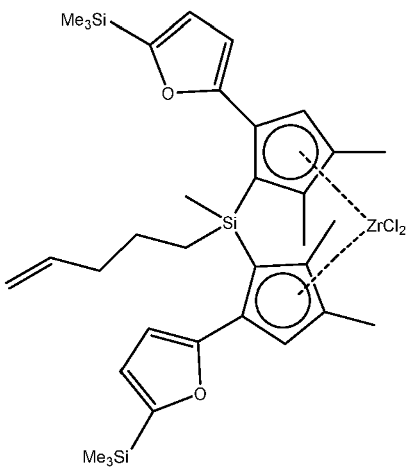

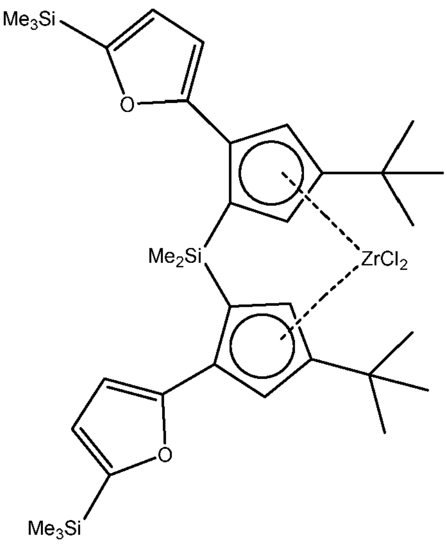

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (P) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred. Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100 wt%).

**Film of the invention**

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt%, more preferably at least 60 wt%, even more preferably at least 70 wt%, yet more preferably at least 80 wt%, of the metallocene catalysed multimodal copolymer (P) of the invention. Most preferably said at least one layer of the film of invention consists of the metallocene catalysed multimodal copolymer (P).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or biaxially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 μm or less, typically 6 to 200 μm, preferably 10 to 180 μm, e.g. 20 to 150 μm or 20 to 120 μm. If desired, the polymer of the invention enables thicknesses of less than 100 μm, e.g. less than 50 μm. Films of the invention with thickness even less than 20 μm can also be produced whilst maintaining good mechanical properties.

Furthermore, the present invention is also directed to the use of the inventive article as packing material, in particular as a packing material for food and/or medical products.

The films of the invention are characterized by a sealing initiation temperature determined as described in the experimental part on a blown film with a thickness of 40 μm of below 82°C, preferably in the range of 60°C to 80°C, more preferably in the range of 65°C to 78°C, like 68°C to 78°C.

In an embodiment, the films comprising the metallocene catalysed multimodal copolymer (P) are additionally characterized by a dart-drop impact strength (DDI) determined according to ASTM D1709, method A on a 40 μm monolayer test blown film of at least 1000 g to more than 1700 g , preferably 1200 g to more than 1700 g and more preferably 1500 g to more than 1700 g.

The upper limit of "more than 1700 g" is due to the upper detection limit of 1700 g of the respective method.

Thus, in a preferred embodiment, the films comprising the metallocene catalysed multimodal polyethylene copolymer (P) are characterized by having at least

a) a sealing initiation temperature determined as described in the experimental part on a blown film with a thickness of 40 μm of below 82°C, preferably in the range of 60 to 80°C, more preferably in the range of 65°C to 78°C, like 68°C to 78°C,
and
b) a dart-drop impact strength (DDI) determined according to ASTM D1709, method A on a 40 μm monolayer test blown film of at least 1000 g to more than 1700 g , preferably 1200 g to more than 1700 g and more preferably 1500 g to more than 1700 g.

Films according to the present invention furthermore have good stiffness (tensile modulus measured on a 40 μm monolayer test blown film according to ISO 527-3), i.e. >150MPa (in both directions) and good optics, i.e. haze (measured on a 40 μm monolayer test blown film according to ASTM D 1003-00) of below 25%.

Thus, the films comprising the metallocene catalysed multimodal copolymer (P) may further or in addition have a haze (measured on a 40 μm monolayer test blown film according to ASTM D 1003-00) of below 25 %, preferably

between 5 % and 24 %, more preferably between 10 % and 22 % and a tensile modulus (measured on a 40 μm monolayer test blown film according to ISO 527-3) in machine (MD) as well as in transverse (TD) direction in the range of from >150MPa to 300 MPa, preferably of from >150MPa to 250 MPa.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component 8 and of Fraction (A-2)*

$$logA = x \cdot logB + (1-x) \cdot logC$$

$$C = 10^{\wedge}\frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (P)
X = weight fraction of Component (A)

For Fraction (A-2):

B = $MFR_2$ of 1$^{st}$ fraction (A-1)
C = $MFR_2$ of 2$^{nd}$ fraction (A-2)
A = final $MFR_2$ (mixture) of loop polymer (= Component (A))
X = weight fraction of the 1$^{st}$ fraction (A-1)

**Density**

Density of the polymer was measured according to ASTM; D792, Method B (density by balance at 23°C) on compression moulded specimen prepared according to EN ISO 1872-2 and is given in $kg/m^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the $_*B4$ sites at 38.3 ppm accounting for the number of reporting sites per comonomer:

$$H = I_{*B4}$$

If present the amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of ≥ 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 40 μm thickness with the following further parameters:

Conditioning time: > 96 h
Specimen width: 25 mm
Sealing pressure: 0.4 $N/mm^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Dart drop strength (DDI)**

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

**Film sample preparation**

The test films consisting of the inventive multimodal copolymer (P) and respective comparative polymers of 40 μm thickness, were prepared using a Collin 30 lab scale mono layer blown film line.The film samples were produced at 194°C, a 1:2.5 blow-up ratio, frostline distance of 120 mm.

## Experimental part

### Cat.Example: Catalyst preparation for IE1 and IE2 (CAT1)

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm.

Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

### Catalyst for Comparative Examples (CAT2)

As catalyst CAT2 an alumoxane containing, supported catalyst containing metallocene bis(1-methyl-3-n-butylcyclopentadienyl) zirconium (IV) chloride and with enhanced ActivCat® activator technology from Grace was used.

### Polymerization: Inventive Examples: Inventive multimodal polyethylene copolymer (P) with 1-butene and 1-hexene comonomers

Borstar pilot plant with a 3-reactor set-up (loop1 - loop2 - GPR 1) and a prepolymerization loop reactor.

The inventive multimodal copolymers (P) of example 1 to example 2 (IE1, IE2) as well as of the comparative examples (CE1 to CE4) were produced by using the polymerization conditions as given in Table 1.

**Table 1:** Polymerization conditions

| | CE1 | CE2 | CE3 | CE4 | IE1 | IE2 |
|---|---|---|---|---|---|---|
| **Prepoly reactor** | | | | | | |
| Catalyst | CAT2 | CAT2 | CAT2 | CAT2 | CAT1 | CAT1 |
| Catalyst feed (g/h) | 29.0 | 29.5 | 29.4 | 17.0 | 35 | 35 |
| Temp. (°C) | 50.0 | 50.0 | 50.0 | 50.0 | 50 | 50 |
| Press. (kPa) | 5718.9 | 5702.4 | 5687.0 | 5692.4 | 5639 | 5617 |
| C2 (kg/h) | 4.0 | 4.0 | 4.0 | 4.0 | 4.0 | 4.0 |
| H2(g/h) | 0.0 | 0.0 | 0.0 | 0.0 | 0.04 | 0.03 |
| C4 (g/h) | 168.4 | 169.8 | 166.1 | 176.3 | 81.9 | 80.6 |
| Split (wt%) | 2.7 | 2.8 | 2.8 | 2.7 | 3.4 | 3.5 |
| **loop 1 Fraction (A-1)** | | | | | | |
| Temp. (°C) | 85 | 85 | 85 | 85 | 85 | 85 |
| Press. (kPa) | 5557.6 | 5556.3 | 5553.6 | 5525.5 | 5544 | 5537 |
| C2 conc. (mol%) | 3.1 | 3.3 | 3.1 | 3.5 | 3.5 | 3.7 |
| H2/C2 ratio (mol/kmol) | 0.2 | 0.2 | 0.2 | 0.1 | 0.41 | 0.50 |
| C4/C2 ratio (mol/kmol) | 85.4 | 75.9 | 77.6 | 33.6 | 41 | 40 |
| Split (wt%) | 17.2 | 17.9 | 17.5 | 15.6 | 17.6 | 17.8 |
| Density (kg/m3) of loop 1 material (fraction (A-1)) | 938 | 940.5 | 940 | 940 | 941 | 943 |
| MFR2 (g/10 min) of loop 1 material (fraction (A-1)) | 3.2 | 7.1 | 6.2 | 0.8 | 5.0 | 10.0 |
| **loop 2** | | | | | | |
| Temp. (°C) | 85.0 | 85.0 | 85.0 | 85.0 | 85 | 85 |
| Press. (kPa) | 5365.5 | 5366.3 | 5360.8 | 5333.4 | 5325 | 5337 |
| C2 conc. (mol%) | 3.1 | 3.2 | 3.1 | 2.7 | 3.5 | 4.1 |
| H2/C2 ratio (mol/kmol) | 0.1 | 0.1 | 0.1 | 0.3 | 0.6 | 0.5 |
| C4/C2 ratio (mol/kmol) | 88.4 | 83.7 | 85.5 | 201.5 | 29 | 28 |
| Split (wt%) | 19.2 | 20.3 | 19.8 | 18.9 | 20.4 | 20 |
| Density (kg/m3) after loop 2 (component (A)) | 938.5 | 941.4 | 940.9 | 942.0 | 940.7 | 942.3 |
| MFR2 (g/10 min) after loop 2 (component (A)) | 3.5 | 8.4 | 7.3 | 6.3 | 5.8 | 7.5 |
| MFR2 (g/10 min) of loop 2 material (fraction (A-2)) | 3.7 | 10 | 8.6 | 45 | 6.8 | 5.5 |
| Density (kg/m3) of loop 2 material (fraction (A-2)) | 939 | 942 | 942 | 944 | 941 | 941 |
| C4 (wt%) after loop 2 material (Component (A)) | 1.03 | 0.98 | 1.00 | 1.08 | 1.21 | 1.21 |
| **GPR** | | | | | | |
| Temp. (°C) | 75.0 | 75.0 | 75.0 | 75.0 | 75.0 | 75 |
| Press. (kPa) | 2000.1 | 2000.2 | 1999.8 | 2000.0 | 2000.0 | 2000 |

| | | | | | | |
|---|---|---|---|---|---|---|
| H2/C2 ratio (mol/kmol) | 0.2 | 0.2 | 0.3 | 0.2 | 1.18 | 1.05 |
| C6/C2 ratio (mol/kmol) | 36.2 | 39.8 | 37.9 | 30.3 | 14.5 | 14.04 |
| Split (wt%) | 61.0 | 59.0 | 60.0 | 62.8 | 58.6 | 58.7 |
| MFR2 (g/10 min) of GPR material (Component (B)) | 0.6 | 0.5 | 0.9 | 0.3 | 0.5 | 0.3 |
| Density (kg/m3) of GPR material (Component (B)) | 899 | 896 | 898 | 902 | 891 | 891 |
| C6 (wt%) of GPR material Component (B)) | 15.41 | 16.27 | 15.67 | 13.22 | 18.60 | 18.23 |

The polymers were mixed with 2400 ppm of Irganox B561. 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of inventive multimodal copolymer (P) and comparative copolymers, as well as film parameters

| **Material** | **CE1** | **CE2** | **CE3** | **CE4** | **IE1** | **IE2** |
|---|---|---|---|---|---|---|
| $MFR_2$ (g/10 min) (final) | 1.2 | 1.5 | 2.1 | 1.0 | 1.3 | 1.0 |
| $MFR_{21}$ (g/10 min) | 22.9 | 32.5 | 44.8 | 19.8 | 38.7 | 30.1 |
| $MFR_{21}/MFR_2$ | 19.1 | 21.7 | 21.3 | 19.8 | 29.8 | 30.1 |
| Density (kg/m$^3$) | 915 | 914.5 | 915 | 917 | 913 | 913 |
| C4 (wt%) | 0.4 | 0.4 | 0.4 | 0.4 | 0.5 | 0.5 |
| C6 (wt%) | 9.6 | 9.6 | 9.4 | 8.3 | 10.7 | 10.9 |
| $MFR_2$(A) /$MFR_2$(final) | 3.1 | 6.4 | 4.0 | 6.36 | 4.5 | 7.5 |
| EBE (kCb ) | 1.1 | 1.1 | 1.1 | 0.9 | 1.3 | 1.3 |
| EBB (kCb) | 0 | 0 | 0 | 0 | 0 | 0 |
| BBB (kCb) | 0 | 0 | 0 | 0 | 0 | 0 |
| EBE (%) | 100 | 100 | 100 | 100 | 100 | 100 |
| EHE (kCb) | 13.2 | 12.6 | 11.9 | 11.7 | 16 | 15.2 |
| EHH (kCb) | 1.2 | 1.3 | 1 | 0.6 | 0.9 | 0.8 |
| HHH (kCb) | 0 | 0 | 0 | 0 | 0 | 0 |
| EHE (%) | 91.7 | 90.6 | 92.2 | 95.1 | 94.7 | 95.0 |
| **Film Properties** | | | | | | |
| SIT [°C] | 70 | 71 | 73 | 88 | 71 | 70 |
| DDI [g] | 1090 | 1110 | 712 | 1100 | >1700 | >1700 |
| Tensile Modulus MPa (MD/TD) | 167/190 | 191/192 | 193/211 | 196/220 | 155/158 | 156/170 |
| Haze | 8.8 | 13.6 | 19.3 | 13.5 | 16.6 | 21.5 |

In Figure 1 it is shown that the Inventive Examples fulfil the relation
EHE% > -1.1875 * C6 (in wt%) + 110.41, whereas the Comparative Examples do not. The higher the value for EHE is, the better the comonomer insertion is, which is reflected in more isolated 1-hexene units.

From the above table it can be clearly seen, that films consisting of the inventive multimodal copolymer (P) show a clearly higher DDI compared to the comparative examples. Furthermore, such films have an improved overall performance, i.e. comparable sealing initiation temperature (SIT) and good stiffness and good haze, but clearly improved DDI.

## Claims

1. A metallocene-catalysed multimodal polyethylene copolymer (P), which consists of

(i) 30.0 to 70.0 wt% of an ethylene-1-butene polymer component (A), and
(ii) 70.0 to 30.0 wt% of an ethylene-1-hexene polymer component (B), whereby the ethylene-1-butene polymer component (A) has a density in the range of from 920 to 950 kg/$m^3$,

an $MFR_2$, determined at 190°C, 2.16 kg, according to ISO 1133, in the range of from 2.0 to 40.0 g/10 min, a 1-butene content in the range of 0.5 to 5.0 wt%, based on the ethylene-1-butene polymer component (A) and an isolated 1-butene comonomer unit amount of > 95 %,
whereby the isolated 1-butene comonomer unit amount is calculated according to formula (I)

$$\text{EXE\%} = 100 \times \frac{EXE}{EXE + EXX + XXX}$$

X being the number of 1-butene branches per 1000 carbon (kCb); and
the ethylene-1-hexene polymer component (B) has a density in the range of from 880 to 915 kg/$m^3$, an $MFR_2$, determined at 190°C, 2.16 kg, according to ISO 1133, in the range of from 0.01 to 1.5 g/10 min, a 1-hexene content in the range of 15.0 to 25.0 wt% based on the ethylene-1-hexene polymer compound (B), an isolated 1-hexene comonomer unit amount according to formula (I), wherein X being the number of 1-hexene branches per 1000 carbon (kCb); fulfilling the equation EXE% > -1.1875 * C6 (of (B) in wt%) + 110.41; and
whereby the multimodal polyethylene copolymer (P) has a density in the range of from 905 to 915 kg/$m^3$, an $MFR_2$, determined at 190°C, 2.16 kg, according to ISO 1133, in the range of from 0.5 to below 2.0 g/10 min and a ratio of the $MFR_{21}$, determined at 190°C, 21.6 kg, according to ISO 1133, to $MFR_2$, determined at 190°C, 2.16 kg, according to ISO 1133, $MFR_{21}/MFR_2$, in the range of from 22 to 50,
wherein ethylene-1-butene polymer component (A) consists of an ethylene polymer fraction (A-1) and an ethylene polymer fraction (A-2),
wherein the ethylene polymer fraction (A-1) has a density in the range of 920 to 960 kg/$m^3$, preferably of 925 to 955 kg/$m^3$, more preferably of 930 to 950 kg/$m^3$; and
an $MFR_2$, determined at 190°C, 2.16 kg, according to ISO 1133, in the range of 1.0 to 20.0 g/10 min, preferably of 1.5 to 18.0 g/10 min, more preferably of 2.0 to 16.0 g/10 min and even more preferably of 2.5 to 14.0 g/10 min, and
the ethylene polymer fraction (A-2) has a density in the range of from 930 to 950 kg/$m^3$, preferably of 935 to 945 kg/$m^3$, and an $MFR_2$, determined at 190°C, 2.16 kg, according to ISO 1133, in the range of 3.0 to 40.0 g/10 min, preferably of 3.2 to 30.0 g/10 min, more preferably of 3.5 to 20.0 g/10 min and most preferably of 3.5 to 10.0 g/10 min.

2. The metallocene-catalysed multimodal copolymer (P) according to claim 1, wherein

- the ethylene polymer component (A) has a $MFR_2$, determined at 190°C, 2.16 kg, according to ISO 1133, of 2.5 to 30 g/10 min, preferably of 3.0 to 20 g/10 min and more preferably of 3.2 to 10 g/10 min and
- the ethylene polymer component (B) has a $MFR_2$, determined at 190°C, 2.16 kg, according to ISO 1133, of 0.05 to 1.5 g/10 min, preferably of 0.1 to 1.2 g/10 min and more preferably of 0.2 to 1.0 g/10 min.

3. The metallocene-catalysed multimodal copolymer (P) according to claim 1 or 2, wherein the ratio $MFR_{21}/MFR_2$ is

in the range of from 25 to 40 and preferably from 28 to 35.

4. The metallocene-catalysed multimodal copolymer (P) according to any of the preceding claims, wherein the total amount of 1-butene, based on the multimodal polymer (P) is in the range of from 0.1 to 1.0 wt%, preferably 0.2 to 0.8 wt% and more preferably 0.3 to 0.6 wt%, the total amount of 1-hexene, based on the multimodal polymer (P) is in the range of 2.0 to 20.0 wt%, preferably 4.0 to 18.0 wt% and more preferably 6.0 to 15.0 wt%, and wherein the amount of comonomer is determined as described in the experimental part.

5. The metallocene-catalysed multimodal copolymer (P) according to any of the preceding claims, wherein the total amount (wt%) of 1-butene, present in the ethylene-1-butene polymer component (A) is 0.8 to 4.0 wt%, preferably 1.0 to 3.0 wt% and more preferably 1.0 to 2.0 wt%, based on the ethylene-1-butene polymer component (A), the total amount of 1-hexene, present in the ethylene-1-hexene polymer component (B) is 16.0 to 22.0 wt%, preferably 17.0 to 20.0 wt%, based on the ethylene-1-hexene polymer component (B), and wherein the amount of comonomer is determined as described in the experimental part.

6. The metallocene-catalysed multimodal copolymer (P) according to any of the preceding claims, wherein the ethylene polymer component (A) is present in an amount of 32.0 to 55.0 wt% based on the multimodal copolymer (P) and preferably in an amount of 34.0 to 45.0 wt% based on the multimodal copolymer (P), and
the ethylene polymer component (B) is present in an amount of 68.0 to 45.0 wt% based on the multimodal copolymer (P), and preferably in an amount of 66.0 to 55.0 wt% based on the multimodal copolymer (P).

7. The metallocene-catalysed multimodal copolymer (P) according to any of the preceding claims, wherein the multimodal copolymer (P) is produced in the presence of metallocene complex of formula (II):

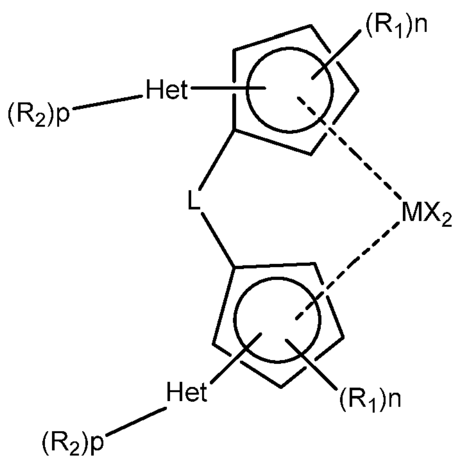

(II)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

8. Film comprising a metallocene-catalysed multimodal copolymer (P) according to any of the preceding claims 1 to 7.

9. Film according to claim 8, wherein the film comprises at least one layer comprising the metallocene-catalysed multimodal copolymer (P), whereby the at least one layer of the comprises at least 50 wt%, preferably at least 60 wt%, more preferably at least 70 wt%, yet more preferably at least 80 wt%, of the metallocene catalysed multimodal copolymer (P) according to any of the preceding claims 1 to 8.

**10.** Film according to claim 8 or 9, wherein the film is **characterized by** a sealing initiation temperature determined as described in the experimental part on a blown film with a thickness of 40 μm of below 82°C, preferably in the range of 60°C to 80°C, more preferably in the range of 65°C to 78°C, like 68°C to 78°C.

**11.** Film according to any of the claims 8 to 10, wherein the film is **characterized by** a dart-drop impact strength (DDI) determined according to ASTM D1709, method A on a 40 μm monolayer test blown film of at least 1000 g to more than 1700 g , preferably 1200 g to more than 1700 g and more preferably 1500 g to more than 1700 g.

**12.** Use of a film according to any of the preceding claims 8 to 11 as packing material, in particular as a packing material for food and/or medical products.

**Patentansprüche**

**1.** Metallocen-katalysiertes multimodales Polyethylen-Copolymer (P), bestehend aus

(i) 30,0 bis 70,0 Gew.-% einer Ethylen-1-Buten-Polymerkomponente (A), und
(ii) 70,0 bis 30,0 Gew.-% einer Ethylen-1-Hexen-Polymerkomponente (B),

wobei die Ethylen-1-Buten-Polymerkomponente (A) aufweist

eine Dichte im Bereich von 920 bis 950 kg/$m^3$,
einen $MFR_2$, bestimmt bei 190°C, 2,16 kg, nach ISO 1133, im Bereich von 2,0 bis 40,0 g/10 min,
einen 1-Buten-Gehalt im Bereich von 0,5 bis 5,0 Gew.-%, bezogen auf die Ethylen-1-Buten-Polymerkomponente (A) und
eine Menge an isolierten 1-Buten-Comonomer-Einheiten von > 95%, wobei die Menge an isolierten 1-Buten-Comonomer-Einheiten nach Formel (I) berechnet wird

$$\mathrm{EXE\%} = 100 \times \frac{EXE}{EXE + EXX + XXX}$$

wobei X die Anzahl der 1-Buten-Verzweigungen pro 1000 Kohlenstoff (kCb) ist; und

die Ethylen-1-Hexen-Polymerkomponente (B) aufweist eine Dichte im Bereich von 880 bis 915 kg/$m^3$,

einen $MFR_2$, bestimmt bei 190°C, 2,16 kg, gemäß ISO 1133, im Bereich von 0,01 bis 1,5 g/10 min,
einen 1-Hexen-Gehalt im Bereich von 15,0 bis 25,0 Gew.-%, bezogen auf die Ethylen-1-Hexen-Polymerverbindung (B),
eine Menge an isolierten 1-Hexen-Comonomer-Einheiten gemäß Formel (I), wobei X die Anzahl der 1-Hexen-Verzweigungen pro 1000 Kohlenstoff (kCb) ist; die die Gleichung erfüllt
EXE% > -1,1875 * C6 (von (B) in Gew.-%) + 110,41; und

wobei das multimodale Polyethylen-Copolymer (P) aufweist eine Dichte im Bereich von 905 bis 915 kg/$m^3$, einen $MFR_2$, bestimmt bei 190°C, 2,16 kg, gemäß ISO 1133, im Bereich von 0,5 bis unter 2,0 g/10 min und ein Verhältnis des $MFR_{21}$, bestimmt bei 190°C, 21,6 kg, gemäß ISO 1133, zu $MFR_2$, bestimmt bei 190°C, 2,16 kg, gemäß ISO 1133, $MFR_{21}/MFR_2$, im Bereich von 22 bis 50,
wobei die Ethylen-1-Buten-Polymer-Komponente (A) aus einer Ethylenpolymerfraktion (A-1) und einer Ethylenpolymerfraktion (A-2) besteht,
wobei die Ethylenpolymerfraktion (A-1) aufweist

eine Dichte im Bereich von 920 bis 960 kg/$m^3$, bevorzugt von 925 bis 955 kg/$m^3$, stärker bevorzugt von 930 bis 950 kg/$m^3$; und
einen $MFR_2$, bestimmt bei 190°C, 2,16 kg, gemäß ISO 1133, im Bereich von 1,0 bis 20,0 g/10 min, bevorzugt von 1,5 bis 18,0 g/10 min, stärker bevorzugt von 2,0 bis 16,0 g/10 min und noch stärker bevorzugt von 2,5 bis 14,0 g/10 min, und

die Ethylenpolymerfraktion (A-2) aufweist
eine Dichte im Bereich von 930 bis 950 kg/$m^3$, bevorzugt von 935 bis 945 kg/$m^3$, und einen $MFR_2$, bestimmt bei 190°C, 2,16 kg, nach ISO 1133, im Bereich von 3,0 bis 40,0 g/10 min, bevorzugt von 3,2 bis 30,0 g/10 min, stärker bevorzugt von 3,5 bis 20,0 g/10 min und am stärksten bevorzugt von 3,5 bis 10,0 g/10 min.

**2.** Metallocen-katalysiertes multimodales Copolymer (P) nach Anspruch 1, wobei

- die Ethylenpolymerkomponente (A) einen $MFR_2$, bestimmt bei 190°C, 2,16 kg, gemäß ISO 1133, von 2,5 bis 30 g/10 min, bevorzugt von 3,0 bis 20 g/10 min und stärker bevorzugt von 3,2 bis 10 g/10 min aufweist und
- die Ethylenpolymerkomponente (B) einen $MFR_2$, bestimmt bei 190°C, 2,16 kg, gemäß ISO 1133, von 0,05 bis 1,5 g/10 min, bevorzugt von 0,1 bis 1,2 g/10 min und stärker bevorzugt von 0,2 bis 1,0 g/10 min aufweist.

**3.** Metallocen-katalysiertes multimodales Copolymer (P) nach Anspruch 1 oder 2, wobei das Verhältnis $MFR_{21}/MFR_2$ im Bereich von 25 bis 40 und bevorzugt von 28 bis 35 liegt.

**4.** Metallocen-katalysiertes multimodales Copolymer (P) nach einem der vorhergehenden Ansprüche, wobei die Gesamtmenge an 1-Buten, bezogen auf das multimodale Polymer (P), im Bereich von 0,1 bis 1,0 Gew.-%, bevorzugt 0,2 bis 0,8 Gew.-% und stärker bevorzugt 0,3 bis 0,6 Gew.-% liegt,
die Gesamtmenge an 1-Hexen, bezogen auf das multimodale Polymer (P), im Bereich von 2,0 bis 20,0 Gew.-%, bevorzugt 4,0 bis 18,0 Gew.-% und stärker bevorzugt 6,0 bis 15,0 Gew.-% liegt, und wobei die Menge des Comonomers wie im experimentellen Teil beschrieben bestimmt wird.

**5.** Metallocen-katalysiertes multimodales Copolymer (P) nach einem der vorhergehenden Ansprüche, wobei die Gesamtmenge (Gew.-%) an 1-Buten, vorhanden in der Ethylen-1-Buten-Polymerkomponente (A), 0,8 bis 4,0 Gew.-%, bevorzugt 1,0 bis 3,0 Gew.-% und stärker bevorzugt 1,0 bis 2,0 Gew.-%, bezogen auf die Ethylen-1-Buten-Polymerkomponente (A), beträgt,
die Gesamtmenge an 1-Hexen, vorhanden in der Ethylen-1-Hexen-Polymerkomponente (B), 16,0 bis 22,0 Gew.-%, bevorzugt 17,0 bis 20,0 Gew.-%, bezogen auf die Ethylen-1-Hexen-Polymerkomponente (B), beträgt, und wobei die Menge des Comonomers wie im experimentellen Teil beschrieben bestimmt wird.

**6.** Metallocen-katalysiertes multimodales Copolymer (P) nach einem der vorhergehenden Ansprüche, wobei die Ethylenpolymerkomponente (A) in einer Menge von 32,0 bis 55,0 Gew.-%, bezogen auf das multimodale Copolymer (P), und bevorzugt in einer Menge von 34,0 bis 45,0 Gew.-%, bezogen auf das multimodale Copolymer (P), vorhanden ist, und
die Ethylenpolymerkomponente (B) in einer Menge von 68,0 bis 45,0 Gew.-%, bezogen auf das multimodale Copolymer (P), und bevorzugt in einer Menge von 66,0 bis 55,0 Gew.-%, bezogen auf das multimodale Copolymer (P), vorhanden ist.

**7.** Metallocen-katalysiertes multimodales Copolymer (P) nach einem der vorhergehenden Ansprüche, wobei das multimodale Copolymer (P) in Gegenwart eines Metallocen-Komplexes der Formel (II) hergestellt wird:

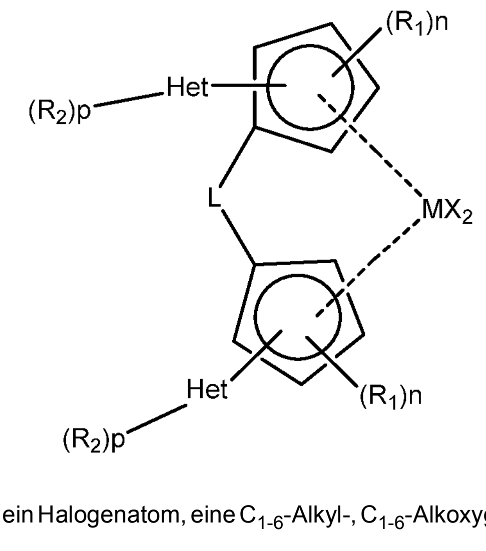

(II)

wobei jedes X unabhängig ein Halogenatom, eine $C_{1-6}$-Alkyl-, $C_{1-6}$-Alkoxygruppe, Phenyl- oder Benzylgruppe ist;

jedes Het unabhängig eine monocyclische heteroaromatische Gruppe ist, die mindestens ein Heteroatom, ausgewählt aus O oder S, enthält;
L $-R'_2Si-$ ist, wobei jedes R' unabhängig $C_{1-20}$-Kohlenwasserstoff oder $C_{1-10}$-Alkyl substituiert mit Alkoxy mit 1 bis 10 Kohlenstoffatomen ist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R^2$ gleich oder unterschiedlich ist und eine $C_{1-6}$-Alkylgruppe, $C_{1-6}$-Alkoxygruppe oder $Si(R)_3$-Gruppe ist;
jedes R eine $C_{1-10}$-Alkyl- oder Phenylgruppe ist, optional substituiert mit 1 bis 3 $C_{1-6}$-Alkylgruppen; und
jedes p 0 bis 1 ist.

**8.** Folie, umfassend ein Metallocen-katalysiertes multimodales Copolymer (P) nach einem der vorhergehenden Ansprüche 1 bis 7.

**9.** Folie nach Anspruch 8, wobei die Folie mindestens eine Schicht umfasst, die das Metallocen-katalysierte multimodale Copolymer (P) umfasst, wobei die mindestens eine Schicht mindestens 50 Gew.-%, bevorzugt mindestens 60 Gew.-%, stärker bevorzugt mindestens 70 Gew.-% und noch stärker bevorzugt mindestens 80 Gew.-% des Metallocen-katalysierten multimodalen Copolymers (P) nach einem der vorangehenden Ansprüche 1 bis 8 umfasst.

**10.** Folie nach Anspruch 8 oder 9, wobei die Folie **gekennzeichnet ist durch** eine Versiegelungsstarttemperatur, bestimmt wie beschrieben im experimentellen Teil an einer Blasfolie mit einer Dicke von 40 μm, von unter 82°C, bevorzugt im Bereich von 60°C bis 80°C, stärker bevorzugt im Bereich von 65°C bis 78°C, wie 68°C bis 78°C.

**11.** Folie nach einem der Ansprüche 8 bis 10, wobei die Folie **gekennzeichnet ist durch** eine Dart-Drop-Schlagzähigkeit (DDI), bestimmt nach ASTM D1709, Verfahren A, an einer 40 μm einschichtigen Testblasfolie von mindestens 1000 g bis mehr als 1700 g, bevorzugt 1200 g bis mehr als 1700 g und stärker bevorzugt 1500 g bis mehr als 1700 g.

**12.** Verwendung einer Folie nach einem der vorhergehenden Ansprüche 8 bis 11 als Verpackungsmaterial, insbesondere als Verpackungsmaterial für Lebensmittel und/oder medizinische Produkte.

## Revendications

**1.** Copolymère de polyéthylène multimodal (P) catalysé par un métallocène, constitué de

(i) 30,0 à 70,0 % en poids d'un composant polymère d'éthylène-1-butène (A), et
(ii) 70,0 à 30,0 % en poids d'un composant polymère d'éthylène-1-hexène (B),

le composant polymère d'éthylène-1-butène (A) ayant

une densité dans la plage de 920 à 950 kg/m$^3$,
un $MFR_2$, déterminée à 190°C, 2,16 kg, selon ISO 1133, dans la plage de 2,0 à 40,0 g/10 min,
une teneur en 1-butène dans la plage de 0,5 à 5,0 % en poids, par rapport au composant polymère d'éthylène-1-butène (A) et
une quantité d'unité de comonomère de 1-butène isolée > 95 %,
la quantité d'unité de comonomère de 1-butène isolée étant calculée selon la formule (I)

$$\mathrm{EXE\%} = 100 \times \frac{EXE}{EXE + EXX + XXX}$$

X étant le nombre de ramifications de 1-butène pour 1000 carbones (kCb) ; et

le composant polymère d'éthylène-1-hexène (B) ayant

une densité dans la plage de 880 à 915 kg/m$^3$,
un $MFR_2$, déterminée à 190°C, 2,16 kg, selon ISO 1133, dans la plage de 0,01 à 1,5 g/10 min,
une teneur en 1-hexène dans la plage de 15,0 à 25,0 % en poids par rapport au composé polymère

d'éthylène-1-hexène (B),
une quantité d'unité de comonomère 1-hexène isolée selon la formule (I), dans laquelle X représente le nombre de ramifications de 1-hexène pour 1000 carbones (kCb) ; remplissant l'équation
EXE% > -1,1875 * C6 (de (B) en % en poids) + 110,41 ; et

le copolymère de polyéthylène multimodal (P) ayant
une densité dans la plage de 905 à 915 $kg/m^3$,
un $MFR_2$, déterminée à 190°C, 2,16 kg, selon ISO 1133, dans la plage de 0,5 à moins de 2,0 g/10 min, et
un rapport entre le $MFR_{21}$, déterminé à 190°C, 21,6 kg, selon ISO 1133, et le $MFR_2$, déterminé à 190°C, 2,16 kg, selon ISO 1133, $MFR_{21}/MFR_2$, dans la plage de 22 à 50,
dans lequel le composant polymère d'éthylène-1-butène (A) est constitué d'une fraction de polymère d'éthylène (A-1) et d'une fraction de polymère d'éthylène (A-2),
la fraction de polymère d'éthylène (A-1) ayant

une densité dans la plage de 920 à 960 $kg/m^3$, préférentiellement de 925 à 955 $kg/m^3$, plus préférentiellement de 930 à 950 $kg/m^3$; et
un $MFR_2$, déterminé à 190°C, 2,16 kg, selon ISO 1133, dans la plage de 1,0 à 20,0 g/10 min, préférentiellement de 1,5 à 18,0 g/10 min, plus préférentiellement de 2,0 à 16,0 g/10 min et encore plus préférentiellement de 2,5 à 14,0 g/10 min, et

la fraction de polymère d'éthylène (A-2) ayant
une densité dans la plage de 930 à 950 $kg/m^3$, préférentiellement de 935 à 945 $kg/m^3$, et un $MFR_2$, déterminé à 190°C, 2.16 kg, selon ISO 1133, dans la plage de 3,0 à 40,0 g/10 min, préférentiellement de 3,2 à 30,0 g/10 min, plus préférentiellement de 3,5 à 20,0 g/10 min et encore plus préférentiellement de 3,5 à 10,0 g/10 min.

**2.** Copolymère multimodal (P) catalysé par un métallocène selon la revendication 1, dans lequel

- le composant polymère d'éthylène (A) a un $MFR_2$, déterminé à 190°C, 2,16 kg, selon ISO 1133, de 2,5 à 30 g/10 min, préférentiellement de 3,0 à 20 g/10 min et plus préférentiellement de 3,2 à 10 g/10 min et
- le composant polymère d'éthylène (B) a un $MFR_2$, déterminé à 190°C, 2,16 kg, selon ISO 1133, de 0,05 à 1,5 g/10 min, préférentiellement de 0,1 à 1,2 g/10 min et plus préférentiellement de 0,2 à 1,0 g/10 min.

**3.** Copolymère multimodal (P) catalysé par un métallocène selon la revendication 1 ou 2, dans lequel le rapport $MFR_{21}/MFR_2$ est dans la plage de 25 à 40, et préférentiellement de 28 à 35.

**4.** Copolymère multimodal (P) catalysé par un métallocène selon l'une quelconque des revendications précédentes, dans lequel la quantité totale de 1-butène, par rapport au polymère multimodal (P), est dans la plage de 0,1 à 1,0 % en poids, préférentiellement de 0,2 à 0,8 % en poids et plus préférentiellement de 0,3 à 0,6 % en poids,
la quantité totale de 1-hexène, par rapport au polymère multimodal (P), est dans la plage de 2,0 à 20,0 % en poids, préférentiellement de 4,0 à 18,0 % en poids et plus préférentiellement de 6,0 à 15,0 % en poids, et la quantité de comonomère étant déterminée comme décrit dans la partie expérimentale.

**5.** Copolymère multimodal (P) catalysé par un métallocène selon l'une quelconque des revendications précédentes, dans lequel la quantité totale (% en poids) de 1-butène présente dans le composant polymère d'éthylène-1-butène (A) est de 0,8 à 4,0 % en poids, préférentiellement de 1,0 à 3,0 % en poids et plus préférentiellement de 1,0 à 2,0 % en poids, par rapport au composant polymère d'éthylène-1-butène (A),
la quantité totale de 1-hexène présente dans le composant polymère d'éthylène-1-hexène (B) est de 16,0 à 22,0 % en poids, préférentiellement de 17,0 à 20,0 % en poids, par rapport au composant polymère d'éthylène-1-hexène (B), et la quantité de comonomère étant déterminée comme décrit dans la partie expérimentale.

**6.** Copolymère multimodal (P) catalysé par un métallocène selon l'une quelconque des revendications précédentes, dans lequel le composant polymère d'éthylène (A) est présent en une quantité de 32,0 à 55,0 % en poids par rapport au copolymère multimodal (P) et préférentiellement en une quantité de 34,0 à 45,0 % en poids par rapport au copolymère multimodal (P), et
le composant polymère d'éthylène (B) est présent en une quantité de 68,0 à 45,0 % en poids par rapport au copolymère multimodal (P), et préférentiellement en une quantité de 66,0 à 55,0 % en poids par rapport au copolymère multimodal (P).

7. Copolymère multimodal (P) catalysé par un métallocène selon l'une quelconque des revendications précédentes, dans lequel le copolymère multimodal (P) est produit en présence d'un complexe de métallocène de formule (II) :

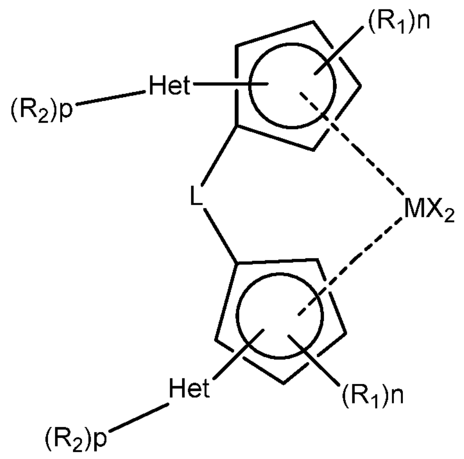

(II)

dans lequel chaque X est indépendamment un atome d'halogène, un groupe $C_{1-6}$-alkyle, un groupe $C_{1-6}$-alkoxy, un groupe phényle ou benzyle ;
chaque Het est indépendamment un groupe hétéroaromatique monocyclique contenant au moins un hétéroatome choisi parmi O ou 5 ; L est -$R'_2$Si-, chaque R' étant indépendamment $C_{1-20}$-hydrocarbyle ou $C_{1-10}$-alkyle substitué par un alcoxy ayant de 1 à 10 atomes de carbone ;
M est Ti, Zr ou Hf ;
chaque $R_1$ est identique ou différent et est un groupe $C_{1-6}$-alkyle ou un groupe $C_{1-6}$-alcoxy ;
chaque n est de 1 à 2 ;
chaque $R^2$ est identique ou différent et est un groupe $C_{1-6}$-alkyle, un groupe $C_{1-6}$-alcoxy ou un groupe -$Si(R)_3$ ;
chaque R est un groupe $C_{1-10}$-alkyle ou phényle éventuellement substitué par 1 à 3 groupes $C_{1-6}$-alkyle ; et
chaque p est de 0 à 1.

8. Film comprenant un copolymère multimodal (P) catalysé par un métallocène selon l'une quelconque des revendications précédentes 1 à 7.

9. Film selon la revendication 8, dans lequel le film comprend au moins une couche comprenant le copolymère multimodal (P) catalysé par un métallocène, ladite au moins une couche comprenant au moins 50 % en poids, préférentiellement au moins 60 % en poids, plus préférentiellement au moins 70 % en poids, encore plus préférentiellement au moins 80 % en poids, du copolymère multimodal (P) catalysé par un métallocène selon l'une quelconque des revendications précédentes 1 à 8.

10. Film selon la revendication 8 ou 9, dans lequel le film est **caractérisé par** une température d'initiation du scellage déterminée comme décrit dans la partie expérimentale sur un film soufflé d'une épaisseur de 40 µm inférieure à 82°C, préférentiellement dans la plage de 60°C à 80°C, plus préférentiellement dans la plage de 65°C à 78°C, comme 68°C à 78°C.

11. Film selon l'une quelconque des revendications 8 à 10, dans lequel le film est **caractérisé par** une résistance à testeur d'impact falling dart (DDI) déterminée selon ASTM D1709, méthode A, sur un film soufflé d'essai monocouche de 40 µm d'au moins 1000 g à plus de 1700 g, préférentiellement 1200 g à plus de 1700 g et plus préférentiellement 1500 g à plus de 1700 g.

12. Utilisation d'un film selon l'une quelconque des revendications précédentes 8 à 11 comme matériau d'emballage, en particulier comme matériau d'emballage pour des produits alimentaires et/ou médicaux.

Figure 1

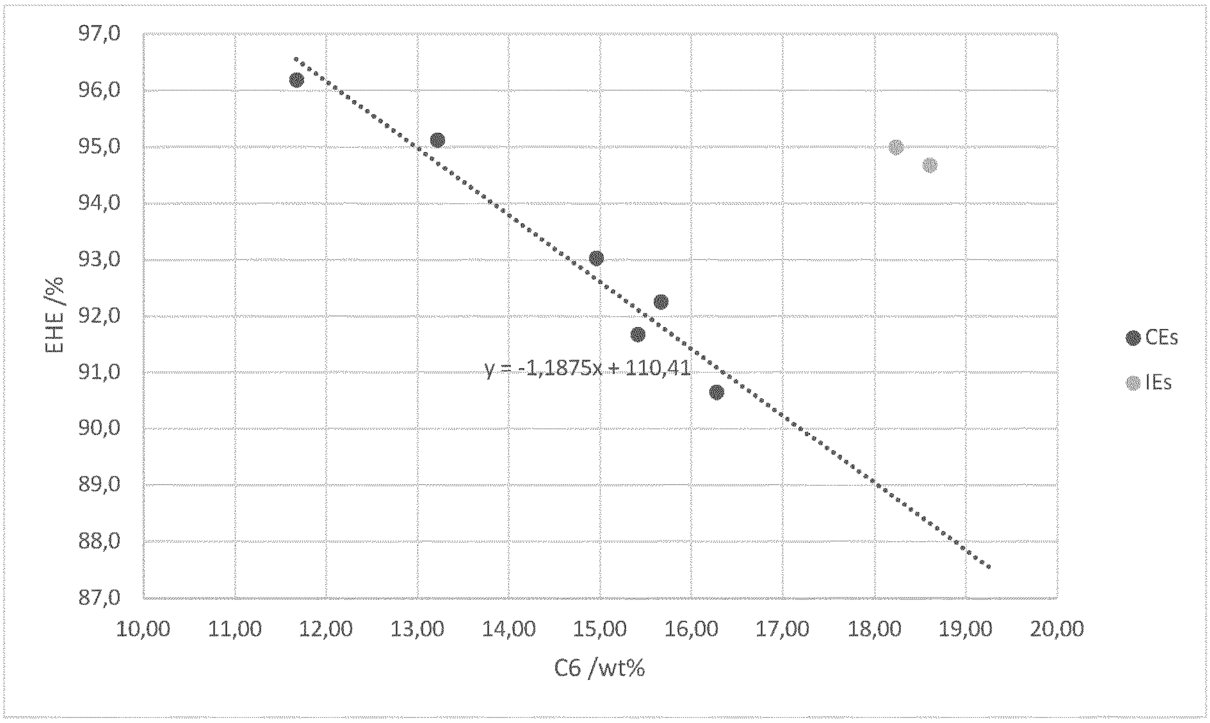
97,0
96,0
95,0
94,0
93,0
92,0
91,0
90,0
89,0
88,0
87,0
EHE /%
y = -1,1875x + 110,41
10,00
11,00
12,00
13,00
14,00
15,00
16,00
17,00
18,00
19,00
20,00
C6 /wt%
CEs
IEs

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- WO 2021013552 A1
- WO 2021191018 A1
- WO 2016083208 A1
- US 2014194277 A1
- WO 2016198273 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A ; BAUGH, D. ; WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun,* 2007, vol. 28, 1128
- **RESCONI, L. ; CAVALLO, L. ; FAIT, A. ; PIEMONTESI, F.** *Chem. Rev.,* 2000, vol. 100, 1253